(19) Europäisches Patentamt
European Patent Office
Office européen des brevets

(11) EP 4 527 618 A1

(12) **EUROPEAN PATENT APPLICATION**
published in accordance with Art. 153(4) EPC

(43) Date of publication:
**26.03.2025 Bulletin 2025/13**

(21) Application number: **23807716.8**

(22) Date of filing: **19.05.2023**

(51) International Patent Classification (IPC):
***B32B 27/30*** (2006.01) ***B32B 3/30*** (2006.01)
***B32B 27/00*** (2006.01) ***E04F 13/07*** (2006.01)
***E04F 15/02*** (2006.01)

(52) Cooperative Patent Classification (CPC):
**B32B 3/30; B32B 27/00; B32B 27/30; E04F 13/07; E04F 15/02**

(86) International application number:
**PCT/JP2023/018721**

(87) International publication number:
**WO 2023/224115 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.05.2022 JP 2022083178**

(71) Applicant: **Toppan Holdings Inc.**
**Tokyo 110-0016 (JP)**

(72) Inventors:
- **HATTORI, Masashi**
  **Tokyo 110-0016 (JP)**
- **AKUTSU, Erika**
  **Tokyo 110-0016 (JP)**

(74) Representative: **TBK**
**Bavariaring 4-6**
**80336 München (DE)**

(54) **DECORATIVE SHEET AND METHOD FOR MANUFACTURING DECORATIVE SHEET**

(57) There is provided a decorative sheet which has excellent designability with a gloss level of 15 or less and which has fingerprint resistance, high durability (particularly, scratch resistance and contamination resistance), and bending processability, and a method of producing the decorative sheet. A decorative sheet (1) according to the present embodiment includes a primary film layer (2) and a surface protective layer (5), in which the surface protective layer (5) has a gloss level of 15 or less; the surface protective layer (5) has on its surface a ridged portion to form an uneven shape; the surface protective layer (5) contains as a main material an ionizing radiation-curable resin; the ionizing radiation-curable resin contains as a main component an acrylic resin containing a repeating structure; the repeating structure is one of an alkylene structure, an ethylene oxide structure, a propylene oxide structure, and an ε-caprolactone structure; and an acrylic monomer forming the acrylic resin has two or more and four or less acryloyl groups, and a shaping parameter expressed by Formula 1 below is in a range of 0.8 or more and 3.4 or less.

FIG.1

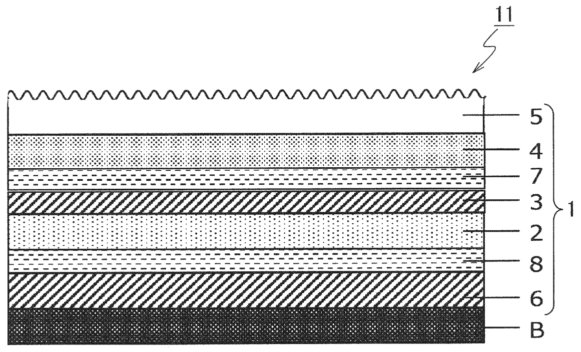




Processed by Luminess, 75001 PARIS (FR)

## Description

[Technical Field]

The present invention relates to a decorative sheet used for surface decoration of interiors and exteriors, fittings, furniture, construction materials, floor materials, and the like of buildings, and a method of producing the decorative sheet.

[Background Art]

Decorative sheets are commonly and widely used in the aforementioned buildings in order to provide designability and durability to surfaces, as decorative boards obtained by laminating decorative sheets to the surfaces of wood, wooden boards, metal plates, fireproof boards, paper substrates, resin substrates, and the like via adhesives or the like.

To provide designability, designs are selected depending on requirements and applications, ranging from wood-grain or stone-grain patterns formed by various printing methods to plain surfaces without patterns. Similarly, surface glossiness is also an important item of designability, and can be selected from a range from a high, mirror-like gloss to a low gloss causing no reflection depending on requirements and applications.

Further, as described above, an important function of decorative sheets along with designability is to provide durability. Durability is determined by overall evaluation of scratch resistance, contamination resistance, and whether these are maintained over a long period of time. Although requirements vary depending on environments and conditions in which decorative sheets are used, decorative sheets having high performance are always in demand.

Durability is typically provided by forming a surface protective layer on the outermost surface of a decorative sheet. For adjusting the above-mentioned glossiness, in particular, for achieving a low gloss, a matting agent (matting additive) is typically added to the surface protective layer.

In addition, decorative sheets are typically subjected to processes such as cutting and bending to form decorative boards or decorative materials, and therefore preferably have processability capable of withstanding these processes.

An example of such decorative sheets obtained in consideration of designability (low gloss), scratch resistance and contamination resistance is a decorative sheet disclosed in PTL 1.

[Citation List]

[Patent Literature]

PTL 1: JP2019-119138 A

[Summary of the Invention]

[Technical Problem]

In recent years, due to expansion of applications of decorative boards using decorative sheets and increasing sophistication of consumer awareness of quality, decorative sheets are required to have low gloss (a gloss level of 15 or less) and achieve a balance among fingerprint resistance, scratch resistance, contamination resistance and bending processability.

To meet the above requirements, gloss may be lowered by, for example, a method of adding a matting agent at high concentration to roughen the surface, but adding a large amount of a matting agent causes the following defects. (1) Fingerprint stains are not easily removed, and fingerprint resistance deteriorates. (2) The matting agent may become detached during a scratch resistance test, and scratch resistance deteriorates. (3) Stains are not easily removed, and contamination resistance deteriorates. (4) Blushing occurs due to the matting agent during bending, and bending processability deteriorates.

For solving the above-described problems, an object of the present invention is to provide a decorative sheet which has excellent designability with low gloss (a gloss level of 15 or less) and which has fingerprint resistance, high durability (particularly, scratch resistance and contamination resistance) and processability (particularly, bending processability), and a method of producing the decorative sheet.

[Solution to Problem]

As a result of repeated experiments to optimize the uneven shape of the surface protective layer and search for structural elements required for materials used in the surface protective layer in order to achieve a low gloss, the present inventor has found that it is possible to provide a decorative sheet having low gloss and exhibiting fingerprint resistance,

high durability (particularly, scratch resistance and contamination resistance) and processability (particularly, bending processability), and a method of producing the decorative sheet.

For solving the problem, a decorative sheet according to an aspect of the present invention includes a primary film layer and a surface protective layer disposed on one surface of the primary film layer, in which the surface protective layer has a gloss level of 15 or less; the surface protective layer has on its surface a ridged portion projecting in a ridged shape to form an uneven shape; the surface protective layer contains as a main material an ionizing radiation-curable resin; the ionizing radiation-curable resin contains as a main component an acrylic resin containing a repeating structure; the repeating structure is one of an alkylene structure, an ethylene oxide structure, a propylene oxide structure, and an ε-caprolactone structure; and an acrylic monomer forming the acrylic resin has two or more and four or less acryloyl groups, and a shaping parameter expressed by Formula 1 below is in a range of 0.8 or more and 3.4 or less.

[Math. 1]

$$\text{Shaping parameter} = \frac{\text{Number of functional groups}/6}{\text{Chain length between acryloyl groups}/100} \qquad \text{[Formula 1]}$$

In Formula 1, "number of functional groups" indicates the number of acryloyl groups (functional groups) of the acrylic monomer, and "chain length between acryloyl groups" indicates the sum of the number of carbon atoms and the number of oxygen atoms which connect between carbonyl carbons of the acryloyl groups of the acrylic monomer. Note that the number of methyl carbons branched in the middle, like propylene oxide, is not contained in "chain length between acryloyl groups". That is, "chain length between acryloyl groups" indicates the number of atoms which connect between the acryloyl groups with the shortest length. When the acrylic monomer has three or more acryloyl groups, the largest value is selected from all combinations of the chain lengths between acryloyl groups, and the selected value (number of atoms) is determined as "chain length between acryloyl groups" in Formula 1.

Furthermore, when the acrylic monomer has only one acryloyl group, "chain length between acryloyl groups" indicates the largest value among the sums of the number of carbons and the number of oxygen atoms which connect from a terminal atom excluding hydrogen at the other end of the acrylic monomer with no acryloyl group to the carbonyl carbon of the acryloyl group. That is, when the number of acryloyl groups is one, "chain length between acryloyl groups" is determined (measured) by counting the number of carbons and the number of oxygens from a single bond oxygen adjacent to the acryloyl group to the monomer terminal.

[Advantageous Effects of the Invention]

According to an aspect of the present invention, there can be provided a decorative sheet that has low gloss (a gloss level of 15 or less) and strikes a balance among fingerprint resistance, scratch resistance, contamination resistance and bending processability, and a method of producing the decorative sheet.

[Brief Description of the Drawings]

Fig. 1 is a schematic cross-sectional view showing a configuration of a decorative sheet according to an embodiment of the present invention.

Fig. 2 is a schematic cross-sectional view showing a configuration of a surface protective layer of a decorative sheet according to an embodiment of the present invention.

Fig. 3 is a two-dimensional image showing a configuration of a surface of a surface protective layer of a decorative sheet according an embodiment of the present invention.

Fig. 4 is a schematic cross-sectional view showing a cross-sectional shape of a ridged portion according to an embodiment of the present invention.

Fig. 5 is a schematic diagram for explaining changes in irradiation intensity of each irradiation light in a production step of a decorative sheet according to an embodiment of the present invention.

[Description of the Embodiments]

A configuration of a decorative sheet according to an embodiment of the present invention will be described below with reference to the drawings.

The drawings are schematic, and a relationship between thickness and planar dimension, a thickness ratio of layers, and the like differ from actual values. Moreover, the embodiments illustrated below are examples of the configuration for embodying the technical idea of the present invention, and the technical idea of the present invention can be variously modified within the technical scope defined in the claims.

(Configuration)

A decorative sheet 1 of the present embodiment is, as shown in Fig. 1, configured by laminating a pattern layer 3, an adhesive layer 7 (a heat-sensitive adhesive layer, an anchor coat layer, a dry lamination adhesive layer), a transparent resin layer 4 and a surface protective layer 5 in this order on a front surface side that is one surface of a primary film layer (substrate layer) 2. Further, a concealing layer 8 and a primer layer 6 are provided on a back surface side that is the other surface of the primary film layer 2. The pattern layer 3, the adhesive layer 7, the transparent resin layer 4, the concealing layer 8 and the primer layer 6 may be omitted.

Furthermore, the decorative sheet 1 of the present embodiment is, as shown in Fig. 1, bonded to a substrate B to constitute a decorative material 11. The substrate B is not particularly limited and is configured by, for example, wood boards, inorganic boards, a metal plate, or a composite plate including a plurality of materials.

<Primary film layer 2>

Suitable examples of the primary film layer 2 may be selected from paper, synthetic resins or foams of synthetic resins, rubbers, nonwoven fabrics, synthetic papers, metal foils, and the like. Examples of the paper include tissue paper, titanium paper, and resin-impregnated paper. Examples of the synthetic resins include polyethylene, polypropylene, polybutylene, polystyrene, polycarbonate, polyester, polyamide, an ethylene-vinyl acetate copolymer, polyvinyl alcohol, and acryl. Examples of the rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethane. As the nonwoven fabric, organic or inorganic nonwoven fabric can be used. Examples of the metal of the metal foil include aluminum, iron, gold, and silver.

When an olefin-based resin is used as the primary film layer 2, the primer layer 6 is preferably disposed between the primary film layer 2 and the substrate material B, because the surface of the primary film layer 2 is often inert. In addition, in order to improve adhesiveness between the substrate material B and the primary film layer 2 made of an olefin-based material, the primary film layer 2 may be subjected to a surface modification treatment such as a corona treatment, a plasma treatment, an ozone treatment, an electron beam treatment, an ultraviolet treatment, or a bichromate treatment.

The material of the primer layer 6 may be the same material as that of the pattern layer 3 described later. Since the primer layer 6 is disposed on the back surface of the decorative sheet 1, an inorganic filler may be added to the primer layer 6 in order to prevent blocking and enhance adhesion with an adhesive, considering that the decorative sheet 1 is rolled up in a web shape. Examples of the inorganic filler include silica, alumina, magnesia, titanium oxide, and barium sulfate.

The layer thickness of the primary film layer 2 is preferably in a range of 20 $\mu$m or greater and 250 $\mu$m or less, in consideration of printing workability and cost.

<Pattern layer 3>

The pattern layer 3 is a layer of a pattern printed on the primary film layer 2 with an ink. A binder for the ink can be appropriately selected from, for example, nitrocellulose, cellulose, vinyl chloride-vinyl acetate copolymers, polyvinyl butyral, polyurethane, acryl, polyester and modified products thereof. The binder may be an aqueous, solvent or emulsion type, and may be a one-part type or a two-part type which uses a curing agent. Further, a curable ink may be used and cured by irradiation with ultraviolet light, electron beams, or the like. Among others, the most typical method is the use of urethane-based inks that are cured using isocyanate. **In** addition to the binder, colorants such as pigments and dyes, extender pigments, solvents and various additives used in general inks are added to the pattern layer 3. Examples of highly versatile pigments include condensed azo pigments, insoluble azo pigments, quinacridones, isoindolines, anthraquinones, imidazolones, cobalt, phthalocyanines, carbon, titanium oxide, iron oxide and pearl pigments of mica or the like.

Besides the application of inks, vapor deposition or sputtering of various metals can be used to form a design on

the pattern layer 3. **In** particular, it is preferred that a photostabilizer is added to the above inks in order to suppress deterioration of the decorative sheet 1 itself due to photodegradation of inks, and extend the life of the decorative sheet 1.

<Adhesive layer 7>

The adhesive layer 7 is a layer also called a heat-sensitive adhesive layer, an anchor coat layer or a dry lamination adhesive layer.

The resin materials used for the adhesive layer 7 are not particularly limited, and can be appropriately selected from, for example, acryl-, polyester-, polyurethane- and epoxy-based resin materials. Examples of the resin materials of the adhesive layer 7 can further include ethylene-vinyl acetate copolymer resin-based adhesives. The method of applying the adhesive layer 7 can be appropriately selected depending on the viscosity of the adhesive, and the like, and gravure coating is typically used. The adhesive is applied to the upper surface of the pattern layer 3 by gravure coating and then laminated to the transparent resin layer 4. The adhesive layer 7 may be omitted when the adhesion strength between the transparent resin layer 4 and the pattern layer 3 is sufficient.

<Transparent resin layer 4>

The resin material of the transparent resin layer 4 is preferably an olefin-based resin. Examples of the olefin-based resin include polypropylene, polyethylene and polybutene, as well as homopolymers and copolymers of two or more of α-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene), and copolymers of ethylene or an α-olefin with another monomer, such as an ethylene-vinyl acetate copolymer, an ethylene-vinyl alcohol copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer and an ethylene-butyl acrylate copolymer.

In order to improve surface strength of the decorative sheet 1, highly crystalline polypropylene is preferably used as the resin of the transparent resin layer 4. In necessary, the transparent resin layer 4 may contain various additives such as a thermal stabilizer, a photostabilizer, an anti-blocking agent, a catalyst scavenger, a colorant, a light scattering agent and a matting agent. Typically, thermal stabilizers such as phenol-, sulfur-, phosphorus- and hydrazine-based thermal stabilizers and photostabilizers such as hindered amine-based photostabilizers are each added in an optional combination.

<Surface protective layer 5>

The surface protective layer 5 includes a core portion 5A and a ridged portion 5B projecting in a ridged shape from one surface of the core portion 5A. Accordingly, an uneven shape is formed on the surface of the surface protective layer 5.

In the decorative sheet 1 according to the present embodiment, the "ridged shape" refers to a shape of long and narrow projections that are linearly continuous in plan view. The ridged portion 5B may be curved or linear in plan view, but is preferably curved from the viewpoint of fingerprint resistance on the surface of the decorative sheet 1. In the present disclosure, the ridged portion 5B refers to, for example, a portion from the bottom to the top of the uneven shape formed on the surface of the surface protective layer 5, and the core portion 5A refers to a portion of the surface protective layer 5 excluding the ridged portion 5B.

Fig. 2 is a cross-sectional view schematically illustrating a cross-section (a cross-section in the thickness direction of the surface protective layer 5) of the ridged portion 5B of the surface protective layer 5, and Fig. 3 is a two-dimensional image showing a configuration of the surface of the surface protective layer 5. Fig. 3 is a two-dimensional image obtained using a laser microscope (OLS-4000 manufactured by Olympus Corporation).

As shown in the two-dimensional image of Fig. 3, the ridged portion 5B is in the shape of long and narrow projections that linearly continue in plan view. As described later, the ridged portion 5B is formed by irradiating the surface of an ionizing radiation-curable resin with light having a certain wavelength to cause buckling distortion of the surface of the ionizing radiation-curable resin.

The shape of such a ridged portion 5B can be expressed by an index RSm (μm) of the surface roughness in the lateral direction (the in-plane direction of the surface protective layer 5 and the left and right direction in Fig. 2), and RSm is preferably 300 or less. RSm is more preferably 250 or less. When RSm is more than 300, gaps between the ridges are so wide that a low gloss may not be achieved.

RSm is further preferably 200 or less. When RSm (μm) is within this numerical range, gaps between the ridges have an appropriate width, and therefore affinity to water or detergent (water containing a surfactant or alcohol) is

sufficiently good. Therefore, in a decorative sheet having RSm within this numerical range, contamination can be easily wiped off with water or a detergent even if the surface of the decorative sheet is contaminated.

RSm is most preferably 150 or less. When RSm is within this numerical range, the value of the surface roughness of the surface protective layer 5 is close to that of the surface roughness of a commercially available washing sponge. Therefore, a washing sponge easily penetrate between the ridges, and contamination can be easily wiped off using a commercially available washing sponge even if the surface of the decorative sheet is contaminated.

RSm is a value as measured using a line roughness meter (complying with JIS B 0601).

The cross-sectional shape of the ridged portion 5B in the thickness direction of the surface protective layer 5 may be sinusoidal wave shape.

The "sinusoidal wave shape" refers to, as shown in Fig. 4, a shape in which a line extending from the lowest position C to the highest position (top) D of the ridged portion 5B can be expressed by a sinusoidal wave.

The mechanism of forming the ridged portion 5B will be described below.

When irradiated with first irradiation light, i.e., light having a wavelength of 200 nm or less, an acrylate can be self-excited. Therefore, irradiation of an acrylate with light at 200 nm or less enables the acrylate to be crosslinked. Light at 200 nm or less reaches a depth of around several tens to hundreds of nanometers in the acrylate. Therefore, crosslinking occurs only on the surface while the underlying part has fluidity, thus producing a fine uneven shape like folding creases.

The surface protective layer 5 thus formed has no interface between the core portion 5A and the ridged portion 5B, and the core portion 5A and the ridged portion 5B are integrally and continuously formed.

Light at 200 nm or less is absorbed by oxygen in the air and greatly attenuated. Therefore, when an acrylate is treated, the reaction atmosphere needs to be controlled by introducing nitrogen gas. The concentration of residual oxygen in the reaction atmosphere is preferably controlled to 2,000 ppm or less. More preferably, the concentration of residual oxygen in the reaction atmosphere is 1,000 ppm or less.

In order to produce an uneven shape using the first irradiation light, i.e., light having a wavelength of 200 nm or less, the first irradiation light preferably has an integrated light intensity of 0.1 $mJ/cm^2$ or greater and 200 $mJ/cm^2$ or less. More preferably, the integrated light intensity is 0.5 $mJ/cm^2$ or greater and 100 $mJ/cm^2$ or less. Further preferably, the integrated light intensity is 10 $mJ/cm^2$ or greater and 50 $mJ/cm^2$ or less. Most preferably, the integrated light intensity is 20 $mJ/cm^2$ or greater and 30 $mJ/cm^2$ or less. When the integrated light intensity is less than 0.1 $mJ/cm^2$, the curing reaction proceeds slowly, and an uneven shape is not sufficiently formed, resulting in the gloss being not decreased. When the integrated light intensity is greater than 200 $mJ/cm^2$, the curing reaction proceeds so rapidly that the surface condition deteriorates.

Light at 200 nm or less can be extracted from excimer VUV light. Excimer VUV light can be produced from a noble gas or noble gas halide compound lamp. When a lamp having a noble gas or a noble gas halide compound gas sealed therein is externally provided with high energy electrons, the lamp generates a large amount of discharge plasma (dielectric barrier discharge). This plasma discharge excites atoms of discharge gas (noble gas) and instantaneously converts them into the excimer state. When the atoms return from the excimer state to the ground state, light having a wavelength in a range specific to that excimer is emitted.

A gas used in an excimer lamp may be any conventionally used gas as long as it emits light at 200 nm or less. Examples of the gas include noble gases such as Xe, Ar and Kr, and mixed gases of noble gas and halogen gas, such as ArBr and ArF. Light from the excimer lamp has different wavelengths (center wavelengths) for different gases, such as about 172 nm (Xe), about 126 nm (Ar), about 146 nm (Kr), about 165 nm (ArBr) and about 193 nm (ArF).

However, in consideration of the magnitude of the resulting photon energy and the difference between the wavelength and the binding energy of organic matter, it is preferred to use a xenon lamp that emits excimer light with a center wavelength of 172 nm as a light source. Further, when the cost of maintaining the equipment, the availability of materials, and the like are also considered, a xenon lamp is preferably used as a light source.

Since the first irradiation light, i.e., light having a wavelength of 200 nm or less, only reaches a depth of around several tens to hundreds of nanometers from the outermost surface in the acrylate, the inside of the surface protective layer 5 including the ridged portion 5B formed by irradiation with light at 200 nm or less has fluidity, and the curing reaction needs to further proceed. **In** order to cure the surface protective layer 5 after the irradiation with light at 200 nm or less, ionizing radiation or UV light having a wavelength greater than the first irradiation light, i.e., greater than the light having a wavelength of 200 nm or less, can be used as second irradiation light.

In the present embodiment, for example, after the irradiation with the second irradiation light, irradiation may be performed with, as third irradiation light, ionizing radiation different from the second irradiation light or UV light having a wavelength greater than the wavelength of the second irradiation light. However, it is preferred that the surface protective layer 5 including the ridged portion 5B is formed only by irradiation with the two types of light, i.e., the first irradiation light and the second irradiation light. The third irradiation light may be applied when the strength of the surface protective layer 5 is not sufficient only by the irradiation with the second irradiation light.

In order to cure the entirety of the surface protective layer 5 by irradiation with the second irradiation light, the second irradiation light preferably has an integrated light intensity of 0.1 $mJ/cm^2$ or greater and 200 $mJ/cm^2$ or less. More

preferably, the integrated light intensity is 0.5 mJ/cm$^2$ or greater and 100 mJ/cm$^2$ or less. Further preferably, the integrated light intensity is 10 mJ/cm$^2$ or greater and 50 mJ/cm$^2$ or less. When the integrated light intensity is less than 0.1 mJ/cm$^2$, the curing reaction proceeds slowly, and sufficient strength cannot be imparted to the entirety of the surface protective layer 5, resulting in the tendency of lower scratch resistance. When the integrated light intensity is greater than 200 mJ/cm$^2$, the curing reaction proceeds so rapidly that the surface condition tends to deteriorate.

The integrated light intensity of the second irradiation light is preferably greater than the integrated light intensity of the first irradiation light. The integrated light intensity of the second irradiation light is preferably 1.1 times or more and 3.0 times or less the integrated light intensity of the first irradiation light, and more preferably 1.5 times or more and 2.0 times or less. When the integrated light intensity of the second irradiation light is less than 1.1 times the integrated light intensity of the first irradiation light, the curing reaction proceeds slowly, and sufficient strength may not be imparted to the entirety of the surface protective layer 5. When the integrated light intensity of the second irradiation light is greater than 3.0 times the integrated light intensity of the first irradiation light, the curing reaction in the entirety of the surface protective layer 5 proceeds so rapidly that the shape of the ridged portion 5B may be deformed.

With reference to Fig. 5, changes in irradiation intensity of the first irradiation light with time and changes in irradiation intensity of the second irradiation light with time will be described.

Fig. 5 is a diagram schematically showing changes in irradiation intensity of the first irradiation light with time and changes in irradiation intensity of the second irradiation light with time.

Figs. 5(a), 5(c), 5(e), 5(g), and 5(i) are diagrams schematically illustrating changes in irradiation intensity of the first irradiation light with time. Figs. 5(b), 5(d), 5(f), 5(h) and 5(j) are diagrams schematically illustrating changes in irradiation intensity of the second irradiation light with time.

As shown in Fig. 5(a), the irradiation intensity of the first irradiation light may gradually increase with the lapse of irradiation time and then gradually decrease with the lapse of irradiation time. As shown in Fig. 5(c), the irradiation intensity of the first irradiation light may gradually decrease with the lapse of irradiation time. As shown in Fig. 5(e), the irradiation intensity of the first irradiation light may gradually increase with the lapse of irradiation time. As shown in Fig. 5(g), the irradiation intensity of the first irradiation light may gradually decrease with the lapse of irradiation time and then gradually increase with the lapse of irradiation time. As shown in Fig. 5(i), the irradiation intensity of the first irradiation light may be constant from the start to the end of irradiation.

As shown in Fig. 5(b), the irradiation intensity of the second irradiation light may gradually increase with the lapse of irradiation time and then gradually decrease with the lapse of irradiation time. As shown in Fig. 5(d), the irradiation intensity of the second irradiation light may gradually decrease with the lapse of irradiation time. As shown in Fig. 5(f), the irradiation intensity of the second irradiation light may gradually increase with the lapse of irradiation time. As shown in Fig. 5(h), the irradiation intensity of the second irradiation light may gradually decrease with the lapse of irradiation time and then gradually increase with the lapse of irradiation time. As shown in Fig. 5(j), the irradiation intensity of the second irradiation light may be constant from the start to the end of irradiation.

In the present embodiment, the forms of irradiation with the first irradiation light shown in Figs. 5(a), 5(c), 5(e), 5(g), and 5(i) can be appropriately combined with the forms of irradiation with the second irradiation light shown in Figs. 5(b), 5(d), 5(f), 5(h), and 5(j). For example, the form of irradiation with the first irradiation light shown in Fig. 5(a) may be combined with the form of irradiation with the second irradiation light shown in Fig. 5(f). Alternatively, the form of irradiation with the first irradiation light shown in Fig. 5(g) may be combined with the form of irradiation with the second irradiation light shown in Fig. 5(f). When the value of RSm is set to 300 or less which is within the more preferable range, the form of irradiation with the first irradiation light shown in Fig. 5(e) and the form of irradiation with the second irradiation light shown in Fig. 5(d) can be combined.

As described above, the ridged portion 5B formed by irradiation with light at 200 nm or less has a finer structure than the uneven shape formed by mechanical processing such as embossing on the surface of the surface protective layer 5. Such a fine uneven shape formed on the surface of the surface protective layer 5 can improve fingerprint resistance while maintaining the matte appearance of the surface of the decorative sheet 1.

The layer thickness of the surface protective layer 5 is preferably in a range of 2 μm or greater and 20 μm or less. More preferably, the layer thickness of the surface protective layer 5 is in a range of 5 μm or greater and 20 μm or less. Further preferably, the layer thickness of the surface protective layer 5 is in a range of 8 μm or greater and 15 μm or less. Most preferably, the layer thickness of the surface protective layer 10 is in a range of 5 μm or greater and 12 μm or less. When the layer thickness of the surface protective layer 5 is less than 2 μm, shaping by vacuum-ultraviolet light does not reach deeply, which inhibits lowered gloss. When the layer thickness of the surface protective layer 5 is desired to be thicker than 20 μm, processability deteriorates, and blushing occurs during bending.

The layer thickness of the surface protective layer 5 is set such that a ratio between the layer thickness of the ridged portion 5B and the layer thickness of the core portion 5A (the layer thickness of the ridged portion 5B/the layer thickness of the core portion 5A) is preferably 0.01 or greater and 2.0 or less and more preferably 0.1 or greater and 1.0 or less.

Here, the pattern layer 3 and the surface protective layer 5 can be formed by, for example, various printing

methods such as gravure printing, offset printing, screen printing, electrostatic printing, and ink-jet printing. Further, since the surface protective layer 5 covers the entire front surface of the primary film layer 2, it can also be formed by various coating methods such as roll coating, knife coating, micro gravure coating, and die coating. These printing methods or coating methods may be individually selected for each layer, or the same method may be selected for collective processing.

The pattern layer 3 and the surface protective layer 5 may be matched from the viewpoint of designability. For matching, the surface protective layer 5 needs to be collectively formed after the formation of the pattern layer 3, and therefore gravure printing is preferably used. In addition, gravure printing is capable of relatively high-speed processing, and is therefore preferred due to cost advantages. Matching means that 50% or more, preferably 70% or more, and most preferably 90% or more of the portion where the surface protective layer 5 is formed overlaps the pattern portion of the pattern layer 3 in plan view.

In order to adjust the thickness of the surface protective layer 5, the coating amount may be adjusted in the aforementioned printing and coating methods. The coating amount can be determined by preparing a base layer (primary film layer) with a surface protective layer and a base layer (primary film layer) without a surface protective layer in various printing and coating methods, and calculating a mass difference therebetween.

The surface protective layer 5 contains an ionizing radiation-curable resin as a main material. A main material refers to being contained in an amount of 60 parts by mass or more, more preferably 70 parts by mass or more, and most preferably 80 parts by mass or more, relative to 100 parts by mass of the surface protective layer. The ionizing radiation-curable resin constituting the surface protective layer 5 may be known resins such as various monomers and commercially available oligomers, and examples thereof include (meth)acryl-, silicone-, polyester-, urethane-, amide- and epoxy-based resins. The ionizing radiation-curable resin may be either aqueous resins or non-aqueous (organic solvent-based) resins. Among these resins, an acrylic resin having a main component containing a repeating structure is most preferable as the ionizing radiation-curable resin constituting the surface protective layer 5.

The main component of the ionizing radiation-curable resin constituting the surface protective layer 5 is a resin polymerized from an acrylate monomer having two to four acryloyl groups. Usable examples of the acrylate monomer include trimethylolpropane triacrylate, glycerine triacrylate, isocyanurate triacrylate, and pentaerythritol triacrylate. When trimethylolpropane triacrylate is used as the main component of the ionizing radiation-curable resin constituting the surface protective layer 5, a curing reaction proceeds even when the integrated light intensity of the first irradiation light is low (for example, even when the integrated light intensity is around 0.1 $mJ/cm^2$). It is considered that this is because the absorbance (absorptivity coefficient) of trimethylolpropane triacrylate to the first irradiation light, i.e., light having a wavelength of 200 nm or less, is relatively high.

A main component refers to being contained in an amount of 70 parts by mass or more, more preferably 80 parts by mass or more, and most preferably 90 parts by mass or more, relative to 100 parts by mass of the constituent resin component.

When gravure printing is used for coating, the ionizing radiation-curable resin has a suitable viscosity range of 10 mPa·s to 500 mPa·s and an optimal viscosity range of 100 mPa·s to 200 mPa·s. A resin having a backbone to cause a hydrogen bond or a $\pi$-$\pi$ stacking often has a high viscosity of 500 mPa·s or more and is not preferable as the ionizing radiation-curable resin in the present embodiment. To adjust viscosity, an organic solvent or a monofunctional acrylate resin with a low viscosity can be added. However, from the viewpoint of environmental impact, an organic solvent is not preferred.

For this reason, when adding a monofunctional acrylate resin to a tri- or higher functional acrylate resin, the monofunctional acrylate resin content is preferably in a range of 10 mass% or greater and 30 mass% or less of the bi- or higher functional acrylate resin content (mass), and more preferably in a range of 15 mass% or greater and 20 mass% or less.

The acrylate monomer for polymerizing the main component of the ionizing radiation-curable resin has any one of an alkylene structure, an ethylene oxide (EO) structure, a propylene oxide (PO) structure, and an $\varepsilon$-caprolactone (CL) structure. **In** the ethylene oxide structure, the propylene oxide structure, and the $\varepsilon$-caprolactone structure, molecules can rotate freely and are highly flexible, and thus the stress needed in buckling distortion for shaping decreases in the surface cured layer formed by irradiation with light at 200 nm or less. This is more preferable because a fine uneven shape is easily formed on the surface cured layer (the front layer of the surface protective layer).

The chain length between the acryloyl groups of the monomer having a repeating structure which constitutes the ionizing radiation-curable resin (the main component of the ionizing radiation-curable resin) is measured by summing the number of carbons and the number of oxygens counted starting from the single-bonded oxygen adjacent to an acryloyl group to the single-bonded oxygen adjacent to a different acryloyl group. When the chain is branched between acryloyl groups, the number of branched atoms is not counted, and the number of atoms present at the shortest distance is counted. When the acryloyl group is tri- or more functional, the length of a chain having the largest length between acryloyl groups is defined as the maximum chain length between acryloyl groups.

In the case of one acryloyl group, measurement is performed by counting the number of carbons and the number

of oxygens starting from the single-bonded oxygen adjacent to the acryloyl group to the monomer terminal.

When calculating a shaping parameter, i.e., a ratio between the number of acryloyl groups (number of functional groups) and the maximum chain length between acryloyl groups (chain length between acryloyl groups), a scaling problem occurs. Therefore, in the present embodiment, the number of acryloyl groups (number of functional groups) is divided by 6, and the resultant value is divided by a value obtained by dividing the maximum chain length between acryloyl groups by 100. The obtained value is defined as a shaping parameter (see Formula 1 below).

[Math. 2]

$$\text{Shaping parameter} = \frac{\text{Number of functional groups}/6}{\text{Chain length between acryloyl groups}/100}$$

[Formula 1]

A method for determining the "maximum chain length between acryloyl groups (chain length between acryloyl groups)" in the present embodiment will be described below.

For example, when a monomer represented by the structural formula below is used as an acrylate monomer according to the present embodiment, the "chain length between acryloyl groups" is 10 counting carbon atoms which connect carbonyl carbons marked with arrows. The number of functional groups of the monomer represented by the structural formula below is 2.

[Chem. 1]

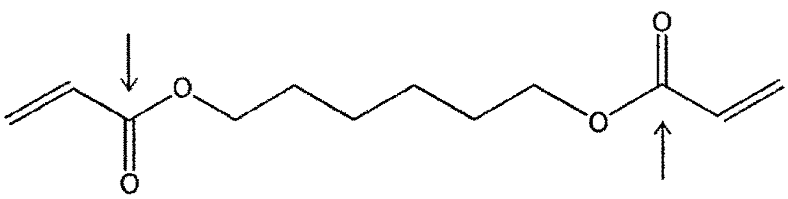

・・・(1)

For example, when a monomer represented by the structural formula below is used as another acrylate monomer according to the present embodiment, the "chain length between acryloyl groups" is 39 counting carbon and oxygen atoms which connect carbonyl carbons marked with arrows. Methyl groups in the middle, which are not on the shortest path, are not summed. The number of functional groups of the monomer represented by the structural formula below is 2.

[Chem. 2]

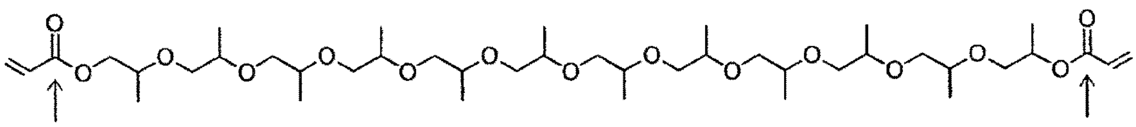

・・・(2)

For example, when a monomer represented by the structural formula below is used as another acrylate monomer according to the present embodiment, the "chain length between acryloyl groups" is 25 counting carbon and oxygen atoms which connect carbonyl carbons marked with arrows. The number of functional groups of the monomer represented by the structural formula below is 3.

[Chem. 3]

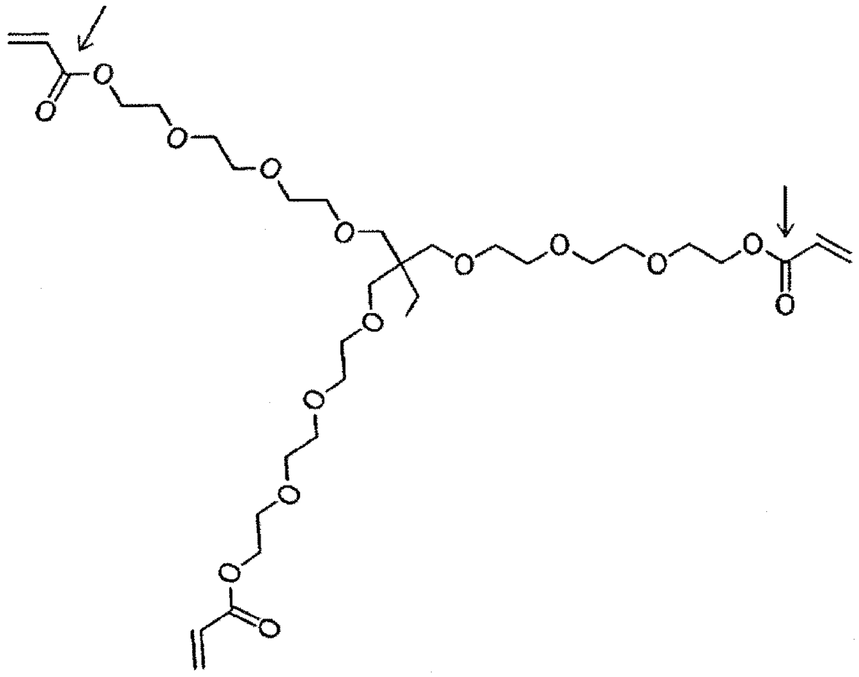

· · · (3)

Properties of the resin are influenced by the above-described shaping parameter. As the number of acryloyl groups increases, crosslinking degree increases. As the maximum chain length of the monomer decreases, resin density increases, which improves scratch resistance but deteriorates processability. Therefore, when the shaping parameter is greater than 3.4, sufficient shaping is not achieved, which is not preferable. When the shaping parameter is less than 0.8, the gloss level sufficiently decreases, but the resin is softened. Thus, scratch resistance deteriorates, which is not preferable.

Therefore, the achievable shaping parameter range for shaping into the decorative sheet while imparting scratch resistance and processability that are preferable for the surface protective layer of the decorative sheet is 0.8 or greater and 3.4 or less.

Although the surface protective layer of the decorative sheet can have preferable properties when the shaping parameter is 0.8 or greater and 3.4 or less described above, it is preferable that the number of acryloyl groups (number of functional groups) is 3 or 4 and the shaping parameter is 1.0 or greater and 2.0 or less. When the number of acryloyl groups (number of functional groups) is 1 or less or 5 or greater, slight roughening (surface unevenness) may occur on the shaped surface, which is not preferable.

The above-described shaping parameter can be calculated by analyzing the molecular structure of the main component of the ionizing radiation-curable resin and applying Formula 1 described above to the molecular structure. The main component of the ionizing radiation-curable resin can be analyzed by NMR, MALDI-TOF-MS, IR, and the like. The ionizing radiation-curable resin may have a molecular weight distribution due to a difference in the number of repetitions of the repeating structure. When there is a molecular weight distribution, one having a molecular weight with the strongest peak in the MALDI-TOF-MS mass spectrum is used as the main component. That is, when there is a molecular weight distribution, the number of repetitions refers to the number of repetitions corresponding to the molecular weight with the strongest peak in the MALDI-TOF-MS mass spectrum.

The surface protective layer 5 may contain particles. When particles having an optimum particle diameter are added in an optimum content, a uniform surface can be formed. Usable examples of the particles include: organic materials such as PE wax, PP wax and resin beads; and inorganic materials such as silica, glass, alumina, titania, zirconia, calcium carbonate, and barium sulfate. The average particle diameter (D50) of the particles is preferably 10 μm or less, more preferably 1 μm or greater and 8 μm or less, further preferably 2 μm or greater and 6 μm or less, and most preferably 4 μm or greater and 5 μm or less. When greater than 10 μm, the particles become detached, causing deterioration of scratch resistance, which is not preferable. When less than 1 μm, the effect of uniformizing the surface is small, which is not preferable.

The added amount of the particles, with respect to 100 parts by mass of the ionizing radiation-curable resin, is preferably 0.5 part by mass or greater and 10 parts by mass or less, more preferably 2 parts by mass or greater and 8 parts

by mass or less, further preferably 2 parts by mass or greater and 6 parts by mass or less, and most preferably 4 parts by mass or greater and 5 parts by mass or less. When the surface protective layer 5 contains the above-described added amount of particles, a uniform surface state can be formed, which is preferable.

The "particle diameter (average particle diameter)" may be a value (average value) obtained by particle size distribution measurement of particles used or a value obtained by actually measuring the particle diameters of multiple particles from cross-sectional observation of the obtained decorative material and calculating the average value thereof. Although both measurement methods are different from each other, the obtained values of the particle diameters are substantially the same. For example, the average particle diameter of particles added to the surface protective layer 5 may be a median diameter (D50) measured using a laser diffraction/scattering particle diameter distribution measuring device.

For curing the entirety of the surface protective layer 5 with UV light, a photoinitiator needs to be added to the surface protective layer 5. The photoinitiator is not particularly limited, and examples thereof include benzophenone-, acetophenone-, benzoin ether- and thioxanthone-based photoinitiators.

The surface protective layer 5 can also optionally have functional additives added such as antimicrobial agents and antifungal agents, in order to impart required functions. The surface protective layer 5 may also have an ultraviolet absorbent and a photostabilizer added as necessary. Typically, ultraviolet absorbents such as benzotriazole-, benzoate-, benzophenone-, and triazine-based absorbents and photostabilizers such as hindered amine-based photostabilizers are added in an optional combination.

Although the decorative sheet 1 thus obtained does not contain a matting agent (matting additive), it has a gloss level of 15 or less and provides a decorative sheet having an extremely low gloss level. If a conventional decorative sheet having a surface protective layer has a gloss level of 8 or less, the surface protective layer has a high matting agent content, which makes the surface protective layer opaque. This may hinder clear expression of the colors and patterns of the colored pattern layer or deteriorate the designability of the decorative sheet. Further, when a decorative sheet having a gloss level close to 0 is desired to be obtained, the content ratio of the matting agent in the surface protective layer further increases, and thus it is difficult to form a surface protective layer having a smooth surface without causing streaks, unevenness, or the like in the formation of the surface protective layer.

The decorative sheet 1 can provide a decorative sheet having a low gloss level of 15 or less while maintaining substantially the same performance as a decorative sheet having a gloss level of 20 or greater. The "gloss level" refers to a measurement value measured at an incident angle of 60 degrees using a gloss meter according to JIS Z 8741.

<Concealing layer 8>

In order to provide the decorative sheet 1 with concealability from the substrate B, a colored sheet may be used as the primary film layer 2, or an opaque concealing layer 8 may be separately added. Although the concealing layer 8 may be basically formed from the same materials as the pattern layer 3, a preferable pigment may be, for example, an opaque pigment, titanium oxide or iron oxide for the sake of concealability. Further, in order to increase concealability, metals such as gold, silver, copper and aluminum, for example, may be added. Typically, aluminum flakes are often added.

(Production method)

A production example of the decorative sheet 1 will be described.

A resin film is used as a primary film layer 2, and a surface protective layer 5 is printed on the upper surface of the primary film layer 2. The surface protective layer 5 is shaped by irradiating a surface of an applied ionizing radiation-curable resin with light having a wavelength of 200 nm or less (first irradiation light) to cure the surface of the ionizing radiation-curable resin and cause buckling distortion of the cured surface due to internal stress. Then, the surface-cured ionizing radiation-curable resin is further cured by irradiating it with ionizing radiation or with UV light having a wavelength greater than the first irradiation light, i.e., greater than the light having a wavelength of 200 nm or less. Thus, a decorative sheet 1 is formed that includes a surface protective layer 5 including a core portion 5A and a ridged portion 5B projecting in a ridged shape from one surface (upper surface) of the core portion 5A.

(Effects and others)

The decorative sheet 1 according to the present embodiment includes a surface protective layer 5 having an uneven shape formed on the surface. With this configuration, the gloss (gloss level) of the surface protective layer can be adjusted without including a matting agent (matting additive) in the surface protective layer. A matting agent reduces oil repellency of a layer formed of resin materials, and thus increases susceptibility to fingerprints. The surface protective layer 5 according to the present embodiment contains no matting agent, and thus does not absorb oil and has relatively high oil repellency. Therefore, the decorative sheet 1 including the surface protective layer 5 is resistant to fingerprints in various situations during site operations, furniture assembly, and residents' daily life.

Moreover, according to the configuration of the surface protective layer 5 having an uneven shape formed on the surface, the oil repellency of the surface protective layer 5 is improved, preventing the surface of the decorative sheet 1 from being oil-stained or adsorbing contaminants.

Furthermore, according to the configuration of the surface protective layer 5 containing no matting agent, scratching the surface of the decorative sheet 1 does not lead to detachment of matting agent particles, reducing occurrence of gloss changes or scratches of the surface of the decorative sheet 1.

The surface protective layer 5 was formed of one layer in the present embodiment but is not limited to such a configuration. For example, the surface protective layer 5 may have a multilayer structure. That is, the surface protective layer 5 may have an uneven shape formed on the surface by laminating multiple layers of identical ionizing radiation-curable resins or laminating multiple layers of different ionizing radiation-curable resins. When multiple layers of different ionizing radiation-curable resins are laminated, for example, it is necessary that the outermost surface layer of the surface protective layer 5 includes as the main material an ionizing radiation-curable resin, the ionizing radiation-curable resin includes as the main component a bi-to tetra-functional acrylic resin containing a repeating structure, the repeating structure is preferably any of an alkylene structure, an ethylene oxide structure, a propylene oxide structure, and an ε-caprolactone structure, and the shaping parameter only has to be 0.8 or greater and 3.4 or less, and a layer positioned on the primary film layer 2 side of the surface protective layer 5 (i.e., a layer positioned below the outermost surface layer of the surface protective layer 5) is not particularly limited.

[Examples]

Examples based on the present invention will be described below. In Examples and Comparative Examples described below, the chain length between acryloyl groups of a used acrylate monomer will be specifically described using the structural formula of the monomer.

<Example 1>

A 55 μm-thick olefin film (manufactured by Riken Technos Corporation) was used as a primary film layer, and one surface of the primary film layer was subjected to corona treatment and then coated with a coating liquid for a surface protective layer described below. The layer thickness of the coating liquid for a surface protective layer was 5 μm. Thereafter, the surface of the coating liquid for a surface protective layer was irradiated by an Xe excimer lamp at a wavelength of 172 nm such that the integrated light intensity was 100 $mJ/cm^2$, to shape the surface. Subsequently, the coating liquid for a surface protective layer was cured by irradiation with 100 kGy of ionizing radiation to form a surface protective layer 5, so that a decorative sheet of Example 1 having a total thickness of 60 μm was obtained.

(Coating liquid for surface protective layer)

The coating liquid for a surface protective layer was constituted by adding particles below to an ionizing radiation-curable resin below.

- Ionizing radiation-curable resin

(Bi-functional acrylate monomer)

Product name: NK Ester A-400 (manufactured by Shin Nakamura Chemical Co., Ltd.)
Content: 100 parts by mass

- Particles

Product name: Sylysia 250N (manufactured by Fuji Silysia Chemical Ltd.)

Particle diameter: 5 μm

Content: 0.5 part by mass

- Chain length between acryloyl groups

[Chem. 4]

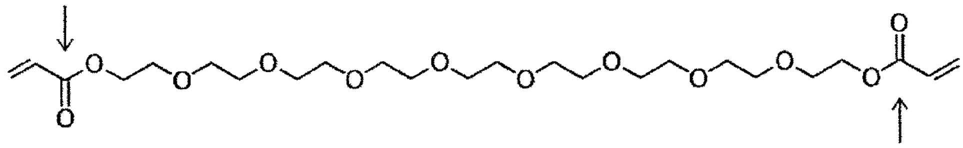

・・・(4)

An acrylate monomer used in Example 1 can be represented by the structural formula above, and the "chain length between acryloyl groups" was 30 counting carbon and oxygen atoms which connect carbonyl carbons marked with arrows. The number of functional groups is 2.

<Example 2>

A decorative sheet of Example 2 was obtained in the same manner as in Example 1, except that the bi-functional acrylate monomer in the ionizing radiation-curable resin of Example 1 was replaced with a bi-functional acrylate monomer below.

- Ionizing radiation-curable resin

(Bi-functional acrylate monomer)

Product name: NK Ester A-200 (manufactured by Shin Nakamura Chemical Co., Ltd.)

Content: 100 parts by mass

- Chain length between acryloyl groups

[Chem. 5]

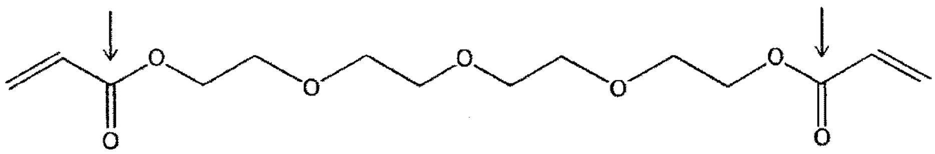

・・・(5)

An acrylate monomer used in Example 2 can be represented by the structural formula above, and the "chain length between acryloyl groups" was 15 counting carbon and oxygen atoms which connect carbonyl carbons marked with arrows. The number of functional groups is 2.

<Example 3>

A decorative sheet of Example 3 was obtained in the same manner as in Example 1, except that the bi-functional acrylate monomer in the ionizing radiation-curable resin of Example 1 was replaced with a bi-functional acrylate monomer below.

- Ionizing radiation-curable resin

(Bi-functional acrylate monomer)

Product name: NK Ester APG-700 (manufactured by Shin Nakamura Chemical Co., Ltd.)

Content: 100 parts by mass

- Chain length between acryloyl groups

[Chem. 6]

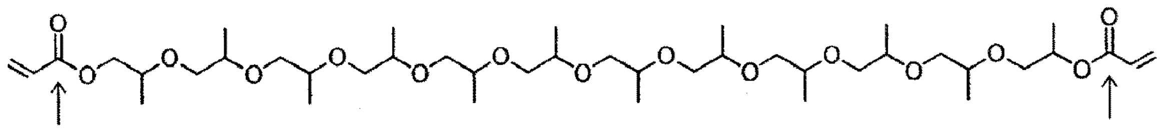

・・・(6)

An acrylate monomer used in Example 3 can be represented by the structural formula above, and the "chain length between acryloyl groups" was 39 counting carbon and oxygen atoms which connect carbonyl carbons marked with arrows. Methyl groups in the middle, which are not on the shortest path, are not summed. The number of functional groups is 2.

<Example 4>

A decorative sheet of Example 4 was obtained in the same manner as in Example 1, except that the bi-functional acrylate monomer in the ionizing radiation-curable resin of Example 1 was replaced with a bi-functional acrylate monomer below.

- Ionizing radiation-curable resin

(Bi-functional acrylate monomer)

Product name: NK Ester APG-400 (manufactured by Shin Nakamura Chemical Co., Ltd.)

Content: 100 parts by mass

- Chain length between acryloyl groups

[Chem. 7]

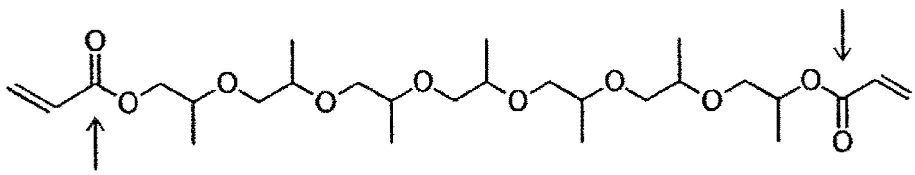

・・・(7)

An acrylate monomer used in Example 4 can be represented by the structural formula above, and the "chain length between acryloyl groups" was 24 counting carbon and oxygen atoms which connect carbonyl carbons marked with arrows. Methyl groups in the middle, which are not on the shortest path, are not summed. The number of functional groups is 2.

<Example 5>

A decorative sheet of Example 5 was obtained in the same manner as in Example 1, except that the bi-functional acrylate monomer in the ionizing radiation-curable resin of Example 1 was replaced with a bi-functional acrylate monomer below.

- Ionizing radiation-curable resin

(Bi-functional acrylate monomer)

Product name: Light Acrylate SR495 (manufactured by Sartomer Co.)

Content: 100 parts by mass

<Example 6>

A decorative sheet of Example 6 was obtained in the same manner as in Example 1, except that the bi-functional acrylate monomer in the ionizing radiation-curable resin of Example 1 was replaced with a bi-functional acrylate monomer below.

- Ionizing radiation-curable resin

(Bi-functional acrylate monomer)

Product name: 1.6HX-A (manufactured by Kyoeisha Chemical Co., Ltd.)

Content: 100 parts by mass

- Chain length between acryloyl groups

[Chem. 8]

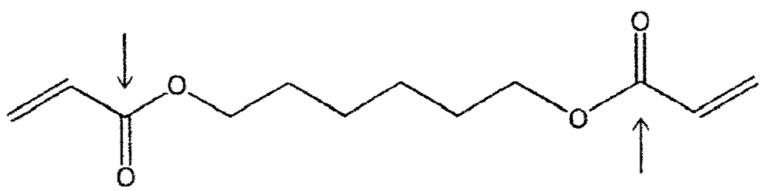

· · · (8)

An acrylate monomer used in Example 6 can be represented by the structural formula above, and the "chain length between acryloyl groups" was 10 counting carbon and oxygen atoms which connect carbonyl carbons marked with arrows. The number of functional groups is 2.

<Example 7>

A decorative sheet of Example 7 was obtained in the same manner as in Example 1, except that the bi-functional

acrylate monomer in the ionizing radiation-curable resin of Example 1 was replaced with a bi-functional acrylate monomer below.

- Ionizing radiation-curable resin

(Bi-functional acrylate monomer)

Product name: A-DOD-N (manufactured by Shin Nakamura Chemical Co., Ltd.)

Content: 100 parts by mass

<Example 8>

A decorative sheet of Example 8 was obtained in the same manner as in Example 1, except that the bi-functional acrylate monomer in the ionizing radiation-curable resin of Example 1 was replaced with a tri-functional monomer below.

- Ionizing radiation-curable resin

(Tri-functional acrylate monomer)

Product name: SR502 (manufactured by Sartomer Co.)

Content: 100 parts by mass

- Chain length between acryloyl groups

[Chem. 9]

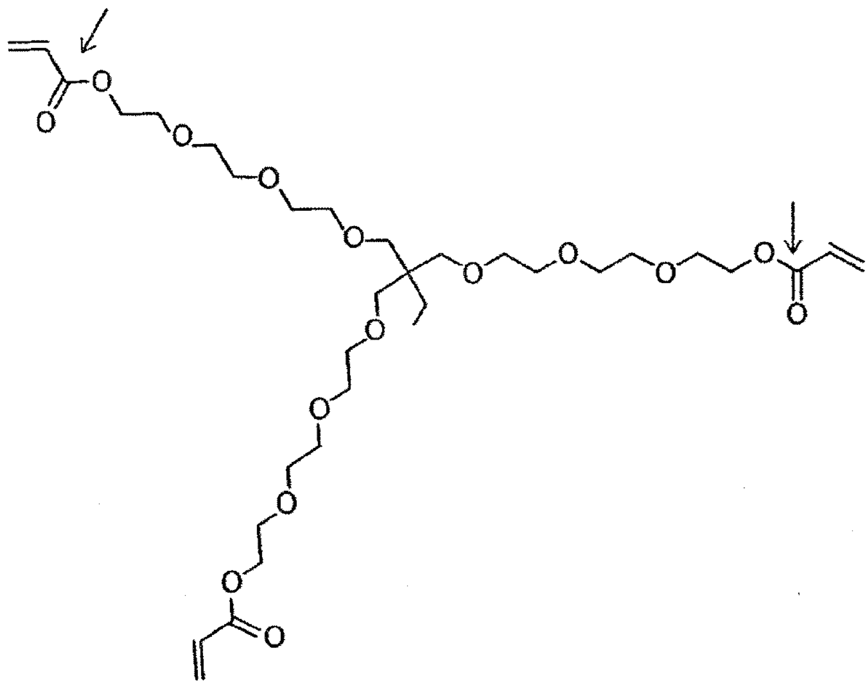

・・・(9)

An acrylate monomer used in Example 8 can be represented by the structural formula above, and the "chain length between acryloyl groups" was 25 counting carbon and oxygen atoms which connect carbonyl carbons marked with arrows. The number of functional groups is 3.

<Example 9>

A decorative sheet of Example 9 was obtained in the same manner as in Example 1, except that the bi-functional acrylate monomer in the ionizing radiation-curable resin of Example 1 was replaced with a tri-functional monomer below.

- Ionizing radiation-curable resin

(Tri-functional acrylate monomer)

Product name: SR9035 (manufactured by Sartomer Co.)

Content: 100 parts by mass

<Example 10>

A decorative sheet of Example 10 was obtained in the same manner as in Example 1, except that the bi-functional acrylate monomer in the ionizing radiation-curable resin of Example 1 was replaced with a tetra-functional monomer below.

- Ionizing radiation-curable resin

(Tetra-functional acrylate monomer)

Product name: ATM-35E (manufactured by Shin Nakamura Chemical Co., Ltd.)

Content: 100 parts by mass

<Example 11>

A decorative sheet of Example 11 having a total thickness of 56 μm was obtained in the same manner as in Example 1, except that the layer thickness of the coating liquid for a surface protective layer in Example 1 was changed to 1 μm.

<Example 12>

A decorative sheet of Example 12 having a total thickness of 57 μm was obtained in the same manner as in Example 1, except that the layer thickness of the coating liquid for a surface protective layer in Example 1 was changed to 2 μm.

<Example 13>

A decorative sheet of Example 13 having a total thickness of 75 μm was obtained in the same manner as in Example 1, except that the layer thickness of the coating liquid for a surface protective layer in Example 1 was changed to 20 μm.

<Example 14>

A decorative sheet of Example 14 having a total thickness of 80 μm was obtained in the same manner as in Example 1, except that the layer thickness of the coating liquid for a surface protective layer in Example 1 was changed to 25 μm.

<Example 15>

A decorative sheet of Example 15 was obtained in the same manner as in Example 1, except that the particles of Example 1 were not added.

<Example 16>

A decorative sheet of Example 16 was obtained in the same manner as in Example 1, except that the particles of Example 1 were replaced with particles below.

- Particles

Product name: Sylysia 450 (manufactured by Fuji Silysia Chemical Ltd.)

Particle diameter: 8.0 μm

Content: 0.5 part by mass

<Example 17>

A decorative sheet of Example 17 was obtained in the same manner as in Example 1, except that the particles of Example 1 were replaced with particles below.

- Particles

Product name: Sylysia 780 (manufactured by Fuji Silysia Chemical Ltd.)

Particle diameter: 11.3 μm

Content: 0.5 part by mass

<Example 18>

A decorative sheet of Example 18 was obtained in the same manner as in Example 1, except that the amount of the particles added in Example 1 was changed to 10 parts by mass.

<Example 19>

A decorative sheet of Example 19 was obtained in the same manner as in Example 1, except that the amount of the particles added in Example 1 was changed to 11 parts by mass.

<Example 20>

A decorative sheet of Example 20 was obtained in the same manner as in Example 1, except that the layer thickness of the coating liquid for a surface protective layer of Example 1 was changed to 1.5 μm, and the amount of the particles added in Example 1 was changed to 0.4 part by mass.

<Example 21>

A decorative sheet of Example 20 was obtained in the same manner as in Example 1, except that the layer thickness of the coating liquid for a surface protective layer was changed to 25 μm, and the particles of Example 1 were not contained.

<Comparative Example 1>

A decorative sheet of Comparative Example 1 was obtained in the same manner as in Example 1, except that the bi-functional acrylate monomer in the ionizing radiation-curable resin of Example 1 was replaced with a mono-functional monomer below.

- Ionizing radiation-curable resin

(Mono-functional acrylate monomer)

Product name: MTG-A (manufactured by Kyoeisha Chemical Co., Ltd.)

Content: 100 parts by mass

<Comparative Example 2>

A decorative sheet of Comparative Example 2 was obtained in the same manner as in Example 1, except that the bi-functional acrylate monomer in the ionizing radiation-curable resin of Example 1 was replaced with a mono-functional monomer below.

- Ionizing radiation-curable resin

(Mono-functional acrylate monomer)

Product name: AM-90G (manufactured by Shin Nakamura Chemical Co., Ltd.)

Content: 100 parts by mass

- Chain length between acryloyl groups

[Chem. 10]

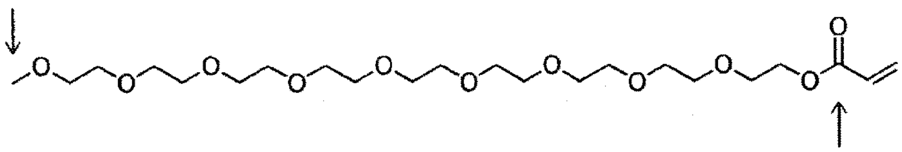

・・・(10)

An acrylate monomer used in Comparative Example 2 can be represented by the structural formula above, and the "chain length between acryloyl groups" was 29 counting carbon and oxygen atoms which connect a carbonyl carbon and one terminal carbon atom marked with arrows. The number of functional groups is 1.

<Comparative Example 3>

A decorative sheet of Comparative Example 3 was obtained in the same manner as in Example 1, except that the bi-functional acrylate monomer in the ionizing radiation-curable resin of Example 1 was replaced with a bi-functional monomer below.

- Ionizing radiation-curable resin

(Bi-functional acrylate monomer)

Product name: D5831 (manufactured by Tokyo Chemical Industry Co., Ltd.)

Content: 100 parts by mass

<Comparative Example 4>

A decorative sheet of Comparative Example 4 was obtained in the same manner as in Example 1, except that the bi-functional acrylate monomer in the ionizing radiation-curable resin of Example 1 was replaced with a bi-functional monomer below.

- Ionizing radiation-curable resin

(Bi-functional acrylate monomer)

Product name: A-600 (manufactured by Shin Nakamura Chemical Co., Ltd.)

Content: 100 parts by mass

<Comparative Example 5>

A decorative sheet of Comparative Example 5 was obtained in the same manner as in Example 1, except that the bi-functional acrylate monomer in the ionizing radiation-curable resin of Example 1 was replaced with a tri-functional monomer below.

- Ionizing radiation-curable resin

(Tri-functional acrylate monomer)

Product name: A-TMPT (manufactured by Shin Nakamura Chemical Co., Ltd.)

Content: 100 parts by mass

<Comparative Example 6>

A decorative sheet of Comparative Example 6 was obtained in the same manner as in Example 1, except that the bi-functional acrylate monomer in the ionizing radiation-curable resin of Example 1 was replaced with a tri-functional monomer below.

- Ionizing radiation-curable resin

(Tri-functional acrylate monomer)

Product name: SR454 (manufactured by Sartomer Co.)

Content: 100 parts by mass

<Comparative Example 7>

A decorative sheet of Comparative Example 7 was obtained in the same manner as in Example 1, except that the bi-functional acrylate monomer in the ionizing radiation-curable resin of Example 1 was replaced with a tetra-functional monomer below.

- Ionizing radiation-curable resin

(Tetra-functional acrylate monomer)

Product name: D5687 (manufactured by Tokyo Chemical Industry Co., Ltd.)

Content: 100 parts by mass

<Comparative Example 8>

A decorative sheet of Comparative Example 8 was obtained in the same manner as in Example 1, except that the bi-functional acrylate monomer in the ionizing radiation-curable resin of Example 1 was replaced with a tetra-functional monomer below.

- Ionizing radiation-curable resin

(Tetra-functional acrylate monomer)

Product name: A-TMMT (manufactured by Shin Nakamura Chemical Co., Ltd.)

Content: 100 parts by mass

<Comparative Example 9>

A decorative sheet of Comparative Example 9 was obtained in the same manner as in Example 1, except that the bi-functional acrylate monomer in the ionizing radiation-curable resin of Example 1 was replaced with a tetra-functional monomer below.

- Ionizing radiation-curable resin

(Tetra-functional acrylate monomer)

Product name: ATM-4E (manufactured by Shin Nakamura Chemical Co., Ltd.)

Content: 100 parts by mass

<Comparative Example 10>

A decorative sheet of Comparative Example 10 was obtained in the same manner as in Example 1, except that the bi-functional acrylate monomer in the ionizing radiation-curable resin of Example 1 was replaced with a hexa-functional monomer below. Note that although "hexa-functional" has been described for convenience, the hexa-functional monomer is actually a mixture of penta- to hexa-functional monomers, and the number of functional groups was calculated from the acid value (mg KOH/g).

- Ionizing radiation-curable resin

(Hexa-functional acrylate monomer)

Product name: A-DPH (manufactured by Shin Nakamura Chemical Co., Ltd.)

Content: 100 parts by mass

- Chain length between acryloyl groups

[Chem. 11]

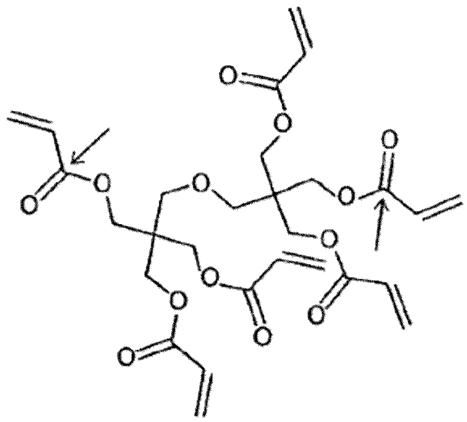

· · · (11)

The acrylate monomer used in Comparative Example 10 can be represented by the structural formula above, and the "chain length between acryloyl groups" was 11 counting carbon and oxygen atoms which connect carbonyl carbons marked with arrows. The "chain length between acryloyl groups" is the largest value on the assumption that multiple carbonyl carbons exist. The number of functional groups is 6.

<Comparative Example 11>

A decorative sheet of Comparative Example 11 was obtained in the same manner as in Example 1, except that the bi-functional acrylate monomer in the ionizing radiation-curable resin of Example 1 was replaced with a hexa-functional monomer below. Note that although "hexa-functional" has been described for convenience, the hexa-functional monomer is actually a mixture of penta- to hexa-functional monomers, and the number of functional groups was calculated from the acid value (mg KOH/g).

- Ionizing radiation-curable resin

(Hexa-functional acrylate monomer)

Product name: A-DPH-12E (manufactured by Shin Nakamura Chemical Co., Ltd.)

Content: 100 parts by mass

<Comparative Example 12>

A decorative sheet of Comparative Example 12 was obtained in the same manner as in Example 1, except that

the irradiation by an excimer lamp in Example 1 was not performed, and the content of the particles was changed to 15 parts by mass.

(Evaluation)

Evaluation was performed for the decorative sheets of Examples 1 to 21 and Comparative Examples 1 to 12 obtained by the above-described methods.

An evaluation of "Good" or "Fair" in the present embodiment causes no problem in actual use and was therefore considered as acceptable.

<Surface state>

Regarding a surface state, the uniformity of the surface was visually evaluated.

The evaluation criteria were as follows.

Good: Uniform surface state

Fair: Nonuniform portion partly present

Poor: Nonuniform surface state on the entire surface

<Gloss level>

Regarding a gloss level, a gloss level at 60 degrees was measured using a Rhopoint IQ (manufactured by Konica Minolta Inc.). In Table 1 and Table 2, this gloss level at 60 degrees was denoted as "60° gloss value".

Since a gloss level of 15 or less is commonly recognized as low gloss, "15 or less" was considered as acceptable in the present examples.

<Fingerprint resistance: Evaluation of wipe-off capability>

Evaluation of fingerprint wipe-off capability was performed as evaluation of fingerprint resistance.

The 60-degree gloss level of the surface of each decorative sheet was measured as [initial gloss level]. Then, after a solution for evaluating fingerprint resistance was attached on the surface protective layer, the solution for evaluating fingerprint resistance attached on the surface of the decorative sheet was wiped off. Subsequently, the 60-degree gloss level of the area from which the solution for evaluating fingerprint resistance had been wiped off was measured as [gloss level after wipe-off]. The solution for evaluating fingerprint resistance used here was a higher fatty acid.

The fingerprint wipe-off rate was calculated as follows.

$$\text{Fingerprint wipe-off rate (\%)} = (\text{gloss level after wipe-off/initial gloss level}) \times 100$$

The evaluation criteria were as follows.

Good: 70% or more and less than 250%

Fair: 50% or more and less than 70%, or 250% or more and less than 300%

Poor: Less than 50%, or 300% or more

<Contamination resistance>

The contamination A test specified by Japanese Agricultural Standards (JAS) was performed as contamination resistance evaluation, in which 10 mm-wide lines were respectively drawn with a blue ink, a quick-drying black ink, and a red crayon, and left to stand for 4 hours. Then, the blue ink, quick-drying black ink, and red crayon lines were wiped off with a cloth impregnated with ethanol to evaluate resistance to the contamination by inks.

The evaluation criteria were as follows.

Good: All the color lines were easily wiped off.

Fair: The color lines were partially wiped off, but stains were partially left.

Poor: The color lines were not wiped off.

<Scratch resistance test: Steel wool rubbing test>

The obtained decorative sheet was stuck onto a wooden substrate B using a urethane-based adhesive, and then subjected to a steel wool rubbing test for evaluating scratch resistance. The decorative sheet was rubbed with steel wool by 20 reciprocations at a load of 100 g, and the decorative sheet was visually examined for scratches and gloss changes occurring on the surface thereof.
The evaluation criteria were as follows.

Good: Neither scratches nor gloss changes occur on the surface.

Fair: Slight scratches or gloss changes occurred on the surface.

Poor: Severe scratches or gloss changes occurred on the surface.

<Bending processability test>

The obtained decorative sheet was adhered to a wooden substrate B using a urethane-based adhesive such that a surface on the primary film layer side (i.e., the back surface of the decorative sheet) faced the wooden substrate B side, and then a V-shaped groove was cut to the boundary between the wooden substrate B and the decorative sheet 1 bonded together in such a manner that scratching was not caused on the decorative sheet.
Next, the wooden substrate B was bent to 90 degrees along the V-shaped groove so that the apex comes to the surface of the decorative sheet on the surface protective layer side (i.e., the front surface of the decorative sheet). The bent part of the surface of the decorative sheet was observed with an optical microscope to detect blushing or cracking, thereby evaluating the state of bending processability.
The evaluation criteria were as follows.

Good: No blushing or cracking are observed.

Fair: Blushing is partly observed.

Poor: Blushing is observed on the entire surface, or cracking is partly observed.

The evaluation results are illustrated in Table 1 and Table 2.

[Table 1]

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Back surface shape | | | Ridged | Ridged | Ridged | Ridged | Ridged | Ridged | Ridged | Ridged | Ridged | Ridged |
| RSm | | | 145 | 210 | 162 | 156 | 241 | 238 | 227 | 165 | 159 | 166 |
| Martens hardness (N/mm$^2$) | | | 7.3 | 119 | 3.3 | 7.1 | 133 | 131 | 121 | 6.09 | 9.5 | 8.6 |
| Thickness (μm) | | | 5 | 5 | 5 | 5 | 5 | 5 | 5 | 5 | 5 | 5 |
| Main component of ionizing radiation-curable resin | Ratio (parts by mass) | | 100 | 100 | 100 | 100 | 100 | 100 | 100 | 100 | 100 | 100 |
| | Number of functional groups | | 2 | 2 | 2 | 2 | 2 | 2 | 2 | 3 | 3 | 4 |
| | Repeating structure | Repeating structure | Oxyethylene | Oxyethylene | Oxypropylene | Oxypropylene | ε-Caprolactone | Ethylene | Ethylene | Oxyethylene | Oxyethylene | Oxyethylene |
| | | Chain length between functional groups | 30 | 15 | 39 | 24 | 13 | 10 | 14 | 25 | 37 | 58 |
| | Shaping parameter | | 1.11 | 2.22 | 0.85 | 1.39 | 2.56 | 3.33 | 2.38 | 2.00 | 1.35 | 1.15 |
| Additive | Particle diameter (μm) | | 5 | 5 | 5 | 5 | 5 | 5 | 5 | 5 | 5 | 5 |
| | Added amount (parts) | | 0.5 | 0.5 | 0.5 | 0.5 | 0.5 | 0.5 | 0.5 | 0.5 | 0.5 | 0.5 |
| Surface state | | | Good | Good | Good | Good | Good | Fair | Good | Good | Good | Good |
| 60° Gloss value | | | 2 | 7.9 | 2.6 | 2.8 | 8.2 | 4.6 | 2.3 | 3.5 | 2.2 | 3.7 |
| Fingerprint resistance | | | Good | Good | Good | Good | Good | Good | Good | Good | Good | Good |
| Contamination | | Contamina | Good | Good | Good | Good | Good | Good | Good | Good | Good | Good |
| resistance | nt A | | | | | | | | | | | |
| Scratch resistance | Steel | Good | Good | Good | Good | Good | Good | Good | Good | Good | Good | |
| Processability | V cut | Good | Good | Good | Good | Fair | Fair | Good | Good | Good | Good | |

| | | | Ex. 11 | Ex. 12 | Ex. 13 | Ex. 14 | Ex. 15 | Ex. 16 | Ex. 17 | Ex. 18 | Ex. 19 | Ex. 20 | Ex. 21 |
|---|---|---|---|---|---|---|---|---|---|---|---|---|---|
| Back surface shape | | | Ridged | Ridged | Ridged | Ridged | Ridged | Ridged | Ridged | Ridged | Ridged | Ridged | Ridged |
| RSm | | | 310 | 245 | 139 | 135 | 148 | 139 | 147 | 136 | 136 | 307 | 135 |
| Martens hardness ($N/mm^2$) | | | 7.8 | 7.6 | 6.9 | 7.0 | 7.3 | 7.8 | 7.2 | 8.0 | 8.0 | 7.8 | 7.0 |
| Thickness ($\mu m$) | | | 1 | 2 | 20 | 25 | 5 | 5 | 5 | 5 | 5 | 1.5 | 25 |
| Main compone nt of ionizing radiation -curable resin | Ratio (parts by mass) | | 100 | 100 | 100 | 100 | 100 | 100 | 100 | 100 | 100 | 100 | 100 |
| | Number of functional groups | | 2 | 2 | 2 | 2 | 2 | 2 | 2 | 2 | 2 | 2 | 2 |
| | Repeat ing structu re | Repeating structure | Oxyethyle ne | Oxyethy lene | Oxyethy lene | Oxyethy lene | Oxyethy lene | Oxyethy lene | Oxyethy lene | Oxyethy lene | Oxyethy lene | Oxyethy lene | Oxyethy lene |
| | | Chain length between functional groups | 30 | 30 | 30 | 30 | 30 | 30 | 30 | 30 | 30 | 30 | 30 |
| | Shaping parameter | | 1.11 | 1.11 | 1.11 | 1.11 | 1.11 | 1.11 | 1.11 | 1.11 | 1.11 | 1.11 | 1.11 |
| Additive | Particle diameter ($\mu m$) | | 5 | 5 | 5 | 5 | - | 8 | 11.3 | 5 | 5 | 5 | - |
| | Added amount (parts) | | 0.5 | 0.5 | 0.5 | 0.5 | - | 0.5 | 0.5 | 10 | 11 | 0.4 | - |
| Surface state | | | Fair | Good | Good | Fair | Fair | Good | Good | Good | Good | Fair | Fair |
| 60° Gloss value | | | 14 | 11.2 | 1.9 | 1.8 | 2.3 | 1.6 | 1.3 | 1.4 | 1.4 | 14.7 | 2.8 |
| Fingerprint resistance | | | Good | Good | Good | Good | Good | Good | Fair | Good | Fair | Good | Good |
| Contamination | Contamination A | | Good | Good | Good | Good | Good | Good | Fair | Good | Fair | Fair | Good |
| resistance | | | | | | | | | | | | | |
| Scratch resistance | Steel | Fair | Good | Good | Good | Fair | Good | Fair | Good | Fair | Fair | | Good | |
| Processability | V cut | Good | Good | Good | Fair | Good | Good | Fair | Good | Fair | Good | | Good | |

[Table 2]

| | | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 | Comp. Ex. 9 | Comp. Ex. 10 |
|---|---|---|---|---|---|---|---|---|---|---|---|---|
| Back surface shape | | | Ridged | Ridged | Ridged | Ridged | Smooth | Ridged | Smooth | Smooth | Smooth | Smooth |
| RSm | | | 157 | 143 | 152 | 161 | 817 | 185 | 1482 | 2010 | 1547 | 2703 |
| Martens hardness ($N/mm^2$) | | | 10.8 | 0.6 | 136 | 4.3 | 350 | 139 | 209 | 306 | 213 | 300 |
| Thickness (μm) | | | 5 | 5 | 5 | 5 | 5 | 5 | 5 | 5 | 5 | 5 |
| Main compone nt of ionizing radiation-curable resin | Ratio (parts by mass) | | 100 | 100 | 100 | 100 | 100 | 100 | 100 | 100 | 100 | 100 |
| | Number of functional groups | | 1 | 1 | 2 | 2 | 3 | 3 | 4 | 4 | 4 | 6 |
| | Repeatin g structure | Repeating structure | Oxyeth ylene | Oxyeth ylene | Oxyethy lene | Oxyeth ylene | | Oxyeth ylene | - | | Oxyethy lene | |
| | | Chain length between functional | 12 | 29 | 9 | 45 | 7 | 13 | 11 | 7 | 13 | 11 |
| | | groups | | | | | | | | | | |
| | Shaping parameter | | 1.4 | 0.6 | 3.7 | 0.7 | 7.1 | 3.8 | 6.1 | 9.5 | 5.1 | 9.1 |
| Additive | Particle diameter (μm) | | 5 | 5 | 5 | 5 | 5 | 5 | 5 | 5 | 5 | 5 |
| | Added amount (parts) | | 0.5 | 0.5 | 0.5 | 0.5 | 0.5 | 0.5 | 0.5 | 0.5 | 0.5 | 0.5 |
| Surface state | | | Good | Good | Poor | Good | Poor | Poor | Poor | Poor | Poor | Poor |
| 60° Gloss value | | | 3.1 | 0.7 | 4.8 | 1.7 | 85.6 | 9.4 | 90.9 | 96.3 | 92.8 | 96.4 |
| Fingerprint resistance | | | Good | Good | Good | Good | Good | Good | Good | Good | Good | Good |
| Contamination resistance | | Contamina nt A | Poor | Poor | Good | Fair | Good | Good | Good | Good | Good | Good |
| Scratch resistance | | Steel | Poor | Poor | Good | Poor | Good | Good | Good | Good | Good | Good |
| Processability | | V cut | Good | Good | Poor | Good | Poor | Poor | Poor | Poor | Poor | Poor |

| | | | Comparative Example 11 | Comparative Example 12 |
|---|---|---|---|---|
| Back surface shape | | | Smooth | Smooth |
| RSm | | | 2083 | 2834 |
| Martens hardness (N/mm$^2$) | | | 151 | 7.3 |
| Thickness (μm) | | | 5 | 5 |
| Main compone nt of ionizing radiation -curable | Ratio (parts by mass) | | 100 | 100 |
| | Number of functional groups | | 6 | 2 |
| | Repeat ing structu re | Repeating structure | Oxyethylene | Oxyethylene |
| | | Chain length between functional groups | 23 | 30 |
| resin | Shaping parameter | | 4.3 | 1.1 |
| Additive | Particle diameter (μm) | | 5 | 5 |
| | Added amount (parts) | | 0.5 | 15 |
| Surface state | | | Poor | Poor |
| 60° Gloss value | | | 93.4 | 98.3 |
| Fingerprint resistance | | | Good | Good |
| Contamination resistance | | Contamination A | Good | Good |
| Scratch resistance | | Steel | Good | Good |
| Processability | | V cut | Poor | Good |

As shown in Table 1, the decorative sheets of Examples 1 to 21 can provide a decorative sheet which strikes a balance among fingerprint resistance, scratch resistance, contamination resistance, and bending processability while having a low gloss (a gloss level of 15 or less). The performance can be further improved by optimizing, in addition to the surface shape of the surface protective layer and the resin composition of the surface protective layer, the layer thickness of the surface protective layer and the particle diameter and added amount of particles to be blended.

The present invention can also have, for example, the following configurations.

(1) A decorative sheet including a primary film layer and a surface protective layer disposed on one surface of the primary film layer, in which

the surface protective layer has a gloss level of 15 or less,

the surface protective layer has on its surface a ridged portion projecting in a ridged shape to form an uneven shape,

the surface protective layer contains as a main material an ionizing radiation-curable resin,

the ionizing radiation-curable resin contains as a main component an acrylic resin containing a repeating structure,

the repeating structure is one of an alkylene structure, an ethylene oxide structure, a propylene oxide structure, and an ε-caprolactone structure, and

an acrylic monomer forming the acrylic resin has two or more and four or less acryloyl groups, and a shaping parameter expressed by Formula 1 below is in a range of 0.8 or more and 3.4 or less.
[Math. 3]

$$\text{Shaping parameter} = \frac{\text{Number of functional groups}/6}{\text{Chain length between acryloyl groups}/100}$$

[Formula 1]

(In Formula 1, "number of functional groups" indicates the number of acryloyl groups (functional groups) of the acrylic monomer, and "chain length between acryloyl groups" indicates the sum of the number of carbon atoms and the number of oxygen atoms which connect between carbonyl carbons of the acryloyl groups of the acrylic monomer. Note that the number of methyl carbons branched in the middle, like propylene oxide, is not contained in "chain length between acryloyl groups". That is, "chain length between acryloyl groups" indicates the number of atoms which connect between the acryloyl groups with the shortest length. When the acrylic monomer has three or more acryloyl groups, the largest value is selected from all combinations of the chain lengths between acryloyl groups, and the selected value (number of atoms) is determined as the "chain length between acryloyl groups" in Formula 1.)

(2) The decorative sheet according to (1) described above, in which RSm of the uneven shape of the surface protective layer is 300 or less.
(3) The decorative sheet according to (1) or (2) described above, in which the surface protective layer has a thickness in a range of 2 μm or greater and 20 μm or less.
(4) The decorative sheet according to any one of (1) to (3) described above, in which the surface protective layer contains particles having an average particle diameter of 10 μm or less in a range of 0.5 part by mass or greater and 10 parts by mass or less with respect to 100 parts by mass of the ionizing radiation-curable resin.
(5) A method of producing a decorative sheet, including irradiating a surface of an applied ionizing radiation-curable resin with light having a wavelength of 200 nm or less and thereafter irradiating with ionizing radiation or UV light having a wavelength greater than the light having a wavelength of 200 nm or less to form a surface protective layer having a ridged portion projecting in a ridged shape.
(6) The method of producing a decorative sheet according to (5) described above, in which the light having a wavelength of 200 nm or less has a wavelength of 172 nm.

[Reference Signs List]

1: Decorative sheet

2: Primary film layer

3: Pattern layer

4: Transparent resin layer

5: Surface protective layer

6: Primer layer

7: Adhesive layer

8: Concealing layer

11: Decorative material

B: Substrate

## Claims

1. A decorative sheet comprising a primary film layer and a surface protective layer disposed on one surface of the primary film layer, wherein

    the surface protective layer has a gloss level of 15 or less,
    the surface protective layer has on its surface a ridged portion projecting in a ridged shape to form an uneven shape,
    the surface protective layer contains as a main material an ionizing radiation-curable resin,
    the ionizing radiation-curable resin contains as a main component an acrylic resin containing a repeating structure,
    the repeating structure is one of an alkylene structure, an ethylene oxide structure, a propylene oxide structure, and an ε-caprolactone structure, and
    an acrylic monomer forming the acrylic resin has two or more and four or less acryloyl groups, and a shaping parameter expressed by Formula 1 below is in a range of 0.8 or more and 3.4 or less.
    [Math. 1]

$$\text{Shaping parameter} = \frac{\text{Number of functional groups}/6}{\text{Chain length between acryloyl groups}/100} \qquad \text{[Formula 1]}$$

    (In Formula 1, "number of functional groups" indicates the number of acryloyl groups (functional groups) of the acrylic monomer, and "chain length between acryloyl groups" indicates a sum of the number of carbons and the number of oxygen atoms which connect between carbonyl carbons of the acryloyl groups of the acrylic monomer. Note that the number of methyl carbons branched in a middle, like propylene oxide, is not contained in "chain length between acryloyl groups".
    That is, "chain length between acryloyl groups" indicates the number of atoms which connect between acryloyl groups with the shortest length.
    When the acrylic monomer has three or more acryloyl groups, the largest value is selected from all combinations of the chain lengths between acryloyl groups, and the selected value (number of atoms) is determined as "chain length between acryloyl groups" in Formula 1.)

2. The decorative sheet according to claim 1, wherein RSm of the uneven shape of the surface protective layer is 300 or less.

3. The decorative sheet according to claim 2, wherein
   the surface protective layer has a thickness in a range of 2 μm or greater and 20 μm or less.

4. The decorative sheet according to claim 3, wherein the surface protective layer contains particles having an average particle diameter of 10 μm or less in a range of 0.5 part by mass or greater and 10 parts by mass or less with respect to 100 parts by mass of the ionizing radiation-curable resin.

5. A method of producing a decorative sheet, comprising irradiating a surface of an applied ionizing radiation-curable resin with light having a wavelength of 200 nm or less and thereafter irradiating with ionizing radiation or UV light having a wavelength greater than the light having a wavelength of 200 nm or less to form a surface protective layer having a ridged portion projecting in a ridged shape.

6. The method of producing a decorative sheet according to claim 5, wherein the light having a wavelength of 200 nm or less has a wavelength of 172 nm.

FIG.1

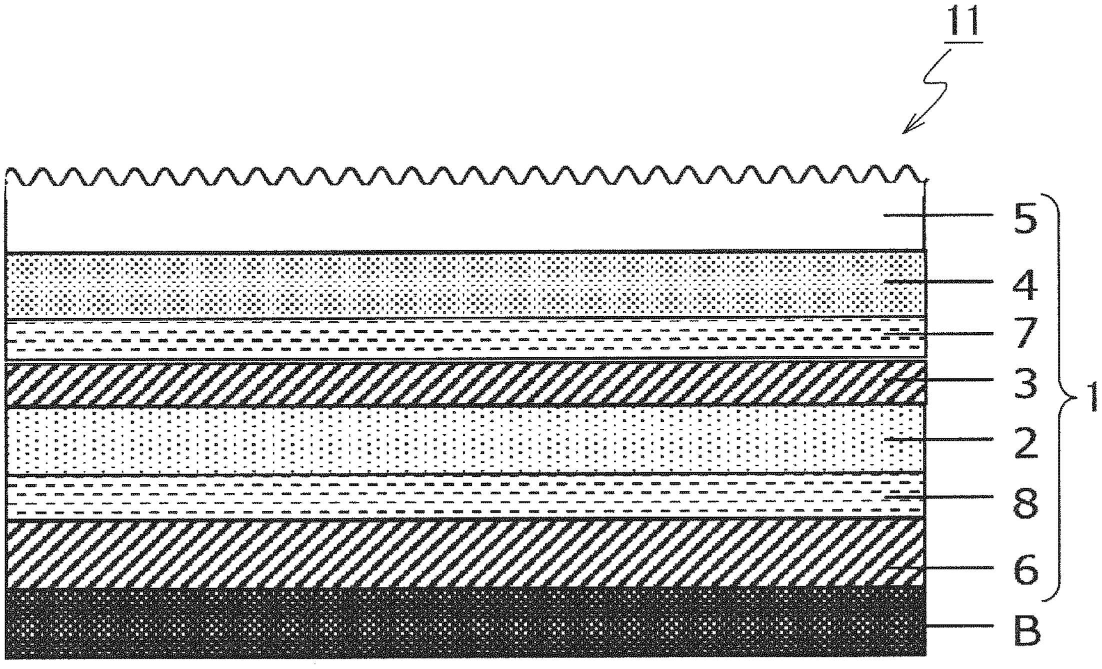


FIG.2

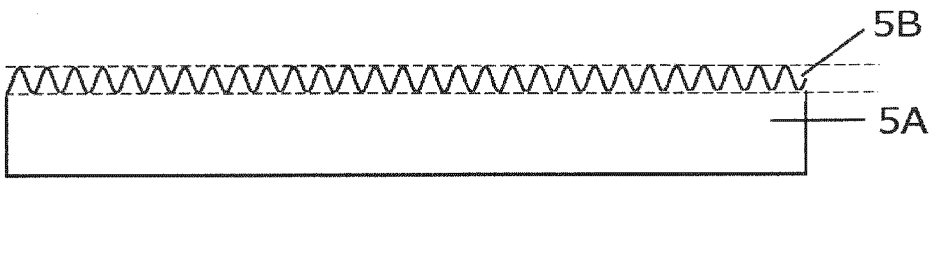

FIG.3

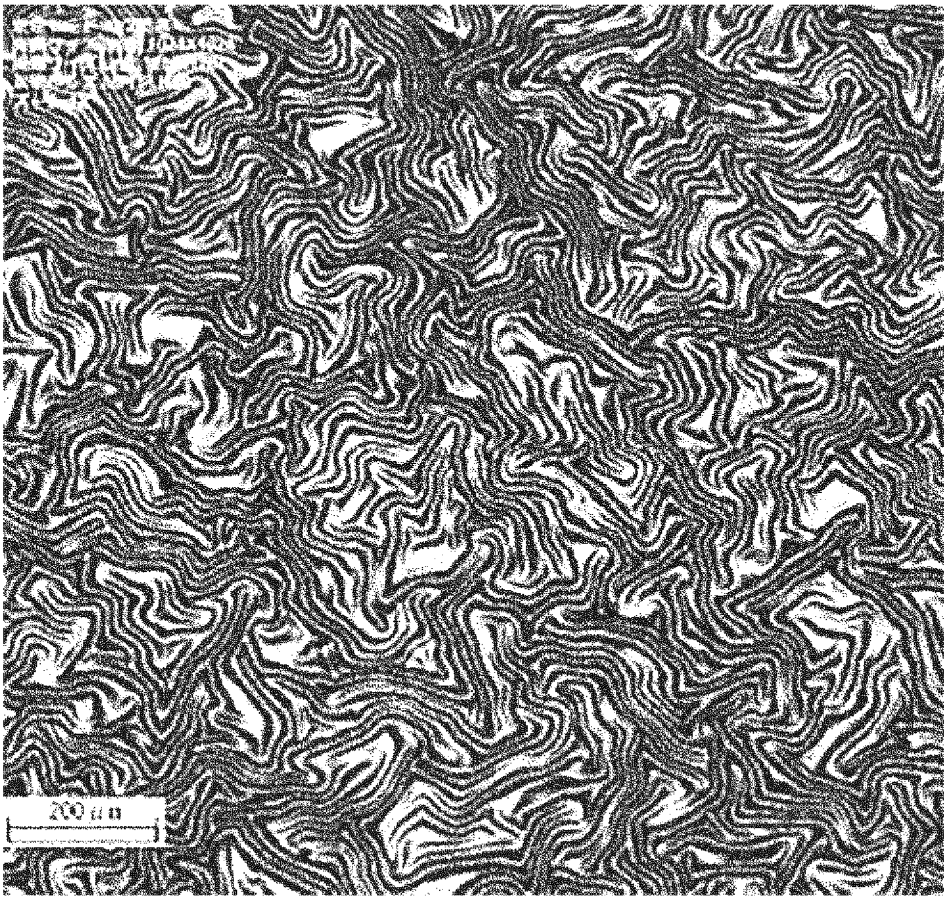


FIG.4

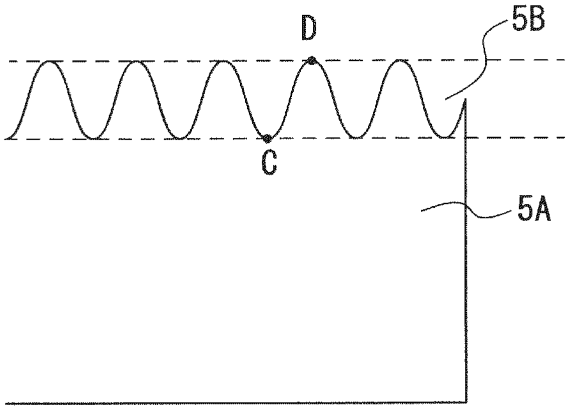

FIG.5

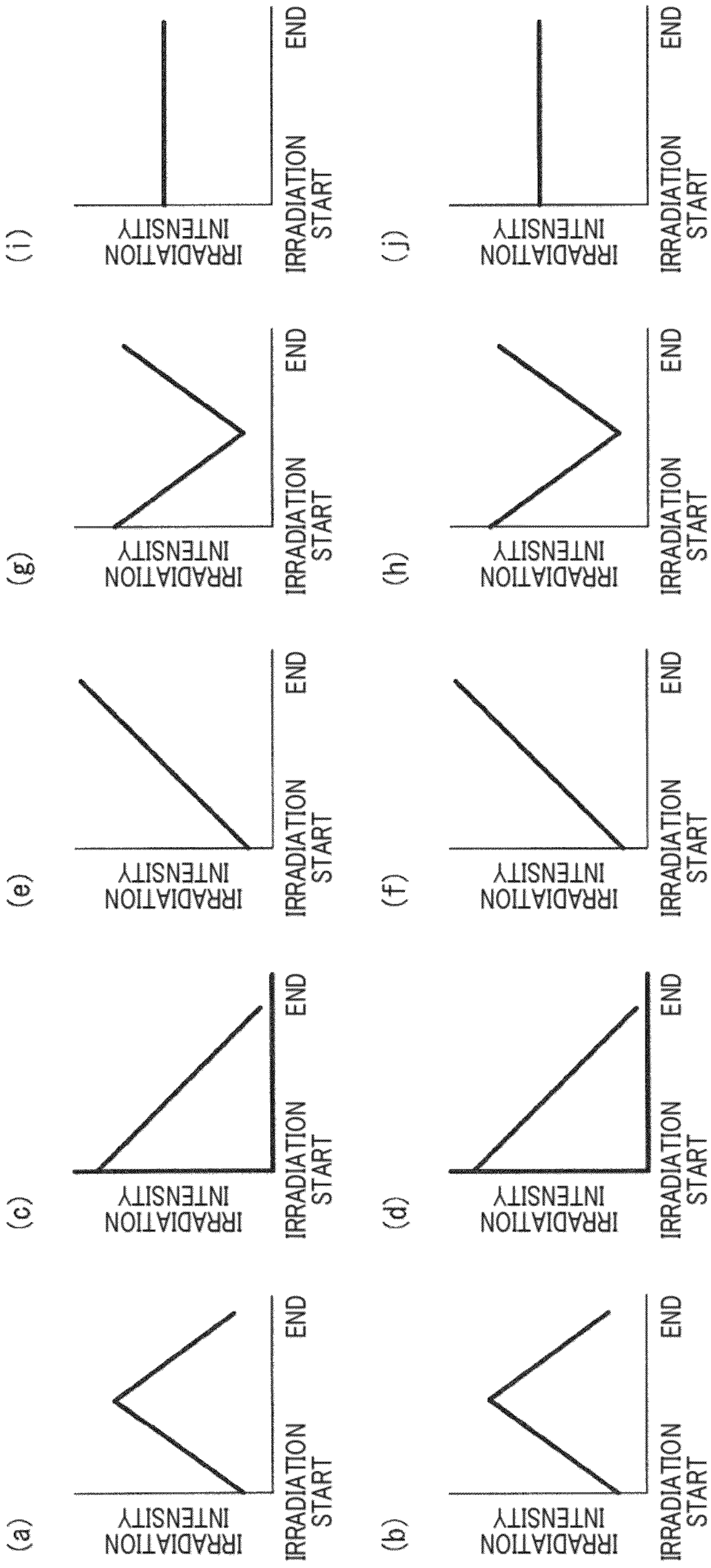

**INTERNATIONAL SEARCH REPORT**

International application No.
**PCT/JP2023/018721**

**A. CLASSIFICATION OF SUBJECT MATTER**

***B32B 27/30***(2006.01)i; ***B32B 3/30***(2006.01)i; ***B32B 27/00***(2006.01)i; ***E04F 13/07***(2006.01)i; ***E04F 15/02***(2006.01)i
FI: B32B27/30 A; B32B3/30; B32B27/00 E; E04F13/07 B; E04F15/02 A

According to International Patent Classification (IPC) or to both national classification and IPC

**B. FIELDS SEARCHED**

Minimum documentation searched (classification system followed by classification symbols)

B32B27/30; B32B3/30; B32B27/00; E04F13/07; E04F15/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | KR 10-2020-0031282 A (LG HAUSYS, LTD.) 24 March 2020 (2020-03-24) paragraphs [0047], [0064]-[0089], [0096], examples 1-4, comparative examples 2-6, fig. 1-4 | 5-6<br>1–4 |
| X<br>A | JP 2021-24102 A (TAKIRON CO., LTD.) 22 February 2021 (2021-02-22) paragraphs [0012], [0017]-[0020], [0024]-[0029], examples 1-18, comparative examples 1, 2, fig. 1, 2 | 5–6<br>1–4 |
| X<br>A | WO 2021/149480 A1 (TOPPAN PRINTING CO., LTD.) 29 July 2021 (2021-07-29) paragraphs [0012], [0024]-[0033], [0036], [0042]-[0046], examples 1-5, fig. 1-4 | 5–6<br>1–4 |
| P, X | WO 2022/145137 A1 (TOPPAN PRINTING CO., LTD.) 07 July 2022 (2022-07-07) paragraphs [0013], [0021]-[0032], [0041], [0043], [0051], examples 1-16, comparative examples 2-4, fig. 1-4 | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2023/018721**

| Patent document cited in search report | Publication date (day/month/year) | Patent family member(s) | Publication date (day/month/year) |
|---|---|---|---|
| KR 10-2020-0031282 A | 24 March 2020 | (Family: none) | |
| JP 2021-24102 A | 22 February 2021 | (Family: none) | |
| WO 2021/149480 A1 | 29 July 2021 | US 2023/0041625 A1<br>fig. 1-4, paragraphs [0023], [0039]-[0053], [0059], [0066]-[0074], examples 1-5<br>EP 4094934 A1<br>CN 114945463 A<br>KR 10-2022-0113746 A | |
| WO 2022/145137 A1 | 07 July 2022 | US 2023/0025597 A1<br>fig. 1-4, paragraphs [0023], [0040]-[0061], [0075], [0078], [0092], examples 1-16, comparative examples 2-4<br>EP 4101640 A1<br>CN 115243889 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019119138 A